# EUROPEAN PATENT SPECIFICATION

(11) **EP 2 487 096 B1**
(45) Date of publication and mention of the grant of the patent: **24.06.2015**
(21) Application number: 12151063.0
(22) Date of filing: 13.01.2012
(51) Int. Cl.: B62K 25/28

(54) **Swing arm for saddle-ride type vehicle**
Schwingarm für ein Sattelfahrzeug
Bras oscillant pour véhicule de type à enfourcher

(30) Priority: 14.02.2011 JP 2011028537
(43) Date of publication of application: 15.08.2012
(73) Proprietor: Honda Motor Co., Ltd., Tokyo 107-8556 (JP)
(72) Inventor: Urano, Ryotaro, Wako-shi, Saitama 351-0193 (JP); Kofuji, Kenji, Wako-shi, Saitama 351-0193 (JP); Mikura, Keita, Wako-shi, Saitama 351-0193 (JP); Ueno, Hirotsugu, Wako-shi, Saitama 351-0193 (JP)
(74) Representative: Stevens, Jason Paul

(56) References cited:
- FR-A1- 2 549 795
- JP-A- 2005 119 604
- JP-U- H0 672 795
- TW-A- 200 424 087
- US-A- 5 263 671
- US-A- 5 495 913

## Description

The present invention relates to a swing arm for a saddle-ride type vehicle including: a pivot part swingably supported on a vehicle body frame; paired left and right arm parts each extending rearwardly from the pivot part and having a rear end portion on which a rear wheel is pivotally supported; and a cross member part laid between middle portions, in a front-rear direction, of the arm parts.

French laid open patent FR 2549795 A1 discloses all of the features of the preamble of claim 1.

Japanese Utility Model Registration No. 2592294 discloses a swing arm in which, for the purpose of reinforcing joining portions of paired left and right arm parts and a cross member part laid between the arm parts, a gusset plate is provided between each of the front and rear surfaces of both end portions of the cross member part and the inner side surface of the corresponding arm part. This swing arm has improved swing arm rigidity.

However, in the case of the swing arm with this configuration as disclosed in Japanese Utility Model Registration No. 2592294 mentioned above, its rigidity may be sometimes too high. That is, swing arms need high rigidity around a pivot part at a front end portion thereof, but excessively high rigidity may cause small vibrations in some cases. In addition, in view of ride quality, it is preferable to provide moderate vertical flexible bendability to portions closer to the rear wheel in some cases. In the case of the swing arm with the configuration disclosed in Japanese Utility Model Registration No. 2592294, the gusset plates increase the rigidity of the arm parts, so that each arm part can flexibly bend only in a portion thereof from the rear end of the corresponding gusset to the axle of the rear wheel, and this makes it difficult to provide moderate flexible bendability to the swing arm.

The present invention has been made in view of such a circumstance, and it is an object of at least the preferred embodiment of the present invention to provide a swing arm for a saddle-ride type vehicle capable of securing its rigidity but also achieving moderate flexible bendability.

For the purpose of achieving the above-mentioned object, a first aspect of the present invention provides a swing arm for a saddle-ride type vehicle including: a pivot part adapted to be swingably supported on a vehicle body frame; paired left and right arm parts each extending rearward from the pivot part and having a rear end portion on which a rear wheel can be pivotally supported; and a cross member part laid between middle portions, in a front-rear direction, of the arm parts; wherein paired left and right plate-shaped reinforcement patches are provided respectively between both end portions of the cross member part and the arm parts, the reinforcement patches being joined to rear surfaces of the respective end portions of the cross member part and to inner side surfaces of portions of the respective arm parts behind the cross member part, and the reinforcement patches form spaces together with the both end portions of the cross member part and the arm parts, respectively, each of the spaces having an open top and bottom; characterized in that cover members covering at least part of the reinforcement patches and the spaces from above are attached to the arm parts, respectively.

According to this aspect of the present invention, provided between both end portions of the cross member part and both arm parts are the paired left and right plate-shaped reinforcement patches joined to the rear surfaces of both end portions of the cross member part and the inner side surface of the arm parts behind the cross member part. Accordingly, the reinforcement patches can secure the rigidity of the joining portions of the cross member part and the arm parts. Additionally, since the reinforcement patches form the spaces, each having an open top and bottom, together with both end portions of the cross member part and the arm parts, the arm parts can flexibly bend moderately in the top-bottom direction behind the cross member part.

Further, the provision of the cover members covering at least part of the reinforcement patches and the spaces from above makes the reinforcement patches and the spaces less visible from the outside than otherwise, and accordingly, the appearance of the exterior can be improved.

In a preferred from, each of the reinforcement patches is formed to have a bent portion in a middle portion thereof.

Accordingly, loads are transmitted from the arm parts toward the reinforcement patches in such a way as to further bend the bent portions. This, as a result, makes it possible to relax stress concentration at the joining portions of the reinforcement patches and their respective arm parts.

Preferably, one of the cover members is provided with a transmission-member holding part which can hold a middle portion of a cord-shaped transmission member for transmitting brake operation force to a rear-wheel brake for braking rotation of the rear wheel.

This eliminates the need for an exclusive member to hold the transmission member at least in the vicinity of the cover member, and so the number of components can be reduced.

In a preferred form, the one cover member is made of a synthetic resin and integrally includes a covering portion, a support plate portion, an attachment plate portion, an ear portion, a hinge portion, and an attachment strip portion, the covering portion covering the reinforcement patch and the space from above, the support plate portion extending outward in a direction of width of the vehicle from the covering portion to be in contact with an upper surface of the arm part, the attachment plate portion extending further outward in the direction of width of the vehicle from the support plate portion, the ear portion being disposed at least on one of front and rear sides of the covering portion, the hinge portion connecting the support plate portion and the ear portion and permitting the ear portion to be bent toward the support plate portion, the attachment strip portion extending from the ear portion in such a way as to be fastened to the arm part together with the attachment plate portion in a state where the ear portion is bent toward the support plate portion; and the transmission-member holding part is formed by the ear portion and the support plate portion cooperating with each other in a state where the ear portion is bent so as to sandwich the transmission member between itself and the support plate portion and where the attachment strip portion is fastened to the arm part together with the attachment plate portion.

Since the transmission-member holding part is made of a synthetic resin and is formed by bending the ear portion, which is part of the cover member, and fastening it to the arm part, this makes it possible to mould the cover member without using a slide mould, and accordingly contributes to reduction in the moulding cost of the cover member.

Preferably, the widths of the reinforcement patches in a top-bottom direction are set smaller than widths of the arm parts in the top-bottom direction. With this arrangement, the arm parts can flexibly bend more easily than otherwise.

The invention also extends to a saddle-ride type vehicle with a swing arm as described above.

It should be noted that a chain cover 43 and a cover member 44 in the following embodiment correspond to the cover members of the present invention, respectively, a brake hose 49 in the embodiment corresponds to the transmission member of the present invention, and a rear-wheel disk brake BR in the embodiment corresponds to the rear-wheel brake of the present invention.

A preferred embodiment of the invention will now be described by way of example only and with reference to the accompanying drawings, in which:
Fig. 1 is a side view of a motorcycle;
Fig. 2 is a view of a swing arm with a rear wheel pivotally supported on a rear end portion thereof, the swing arm being seen in the direction of the arrows 2-2 in Fig. 1;
Fig. 3 is a view of the swing arm alone seen in the same direction as Fig. 2;
Fig. 4 is a view seen in the direction of the arrow 4 in Fig. 3;
Fig. 5 is a plan view of a cover member;
Fig. 6 is a cross-sectional view taken along the line 6-6 in Fig. 5;
Fig. 7 is a cross-sectional view taken along the line 7-7 in Fig. 5; and
Fig. 8 is an enlarged cross-sectional view taken along the line 8-8 in Fig. 2.

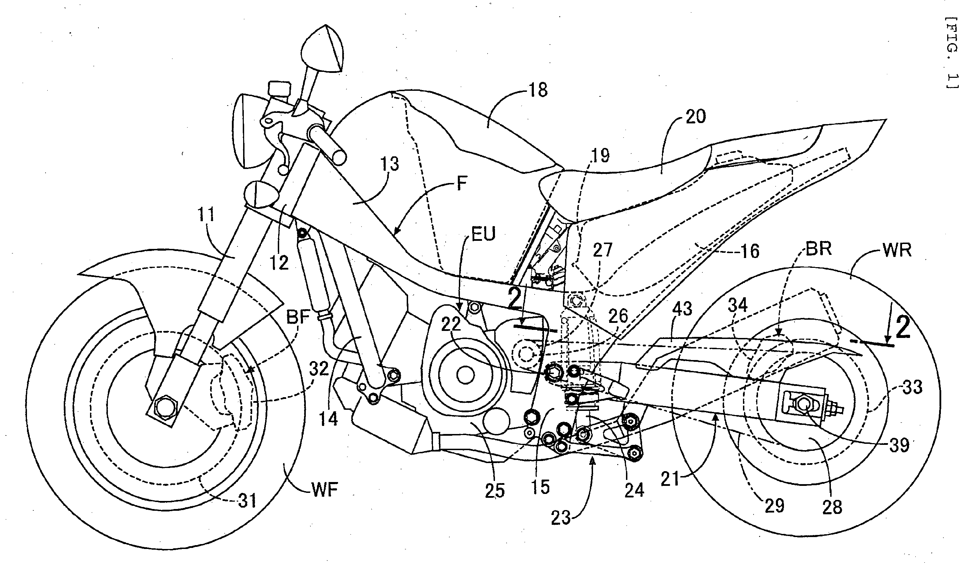

As shown in Fig. 1, a vehicle body frame F of a motorcycle being a saddle-ride type vehicle includes: a head pipe 12 steerably supporting a front fork 11 which pivotally supports a front wheel WF; paired left and right main frames 13 extending downward toward the rear from the head pipe 12 in a side view; paired left and right down frames 14 linked to front end portions of the main frames 13 which are inclined downward toward the rear at angles steeper than the main frames 13, respectively; paired left and right pivot plates 15 extending downward from the rear ends of both main frames 13, respectively; and paired left and right seat frames 16 extending upward toward the rear from both pivot plates 15, respectively.

An engine unit EU is disposed below the main frames 13 and supported on the main frames 13, the down frames 14, and the pivot plates 15. A storage box 18 disposed above the engine unit EU is supported on the main frames 13. A fuel tank 19 is disposed behind the storage box 18 and obliquely above the engine unit EU. A riding seat 20 supported on the seat frames 16 is disposed covering the fuel tank 19 from above.

The front end of a swing arm 21 pivotally supporting a rear wheel WR at a rear end portion thereof is supported on the pivot plates 15, and is swingable in the vertical direction. A rear cushion unit 24 is provided between a link mechanism 23 and the pivot plates 15, the link mechanism 23 being provided between the swing arm 21 and the pivot plates 15.

A transmission (not shown) is housed inside a crankcase 25 provided to the engine unit EU. An endless chain 29 is wound around a drive sprocket 27 and a driven sprocket 28, the drive sprocket 27 being fixed to an output shaft 26 of the transmission at a left side of the crankcase 25, the driven sprocket 28 being disposed on a left side of the rear wheel WR and provided coaxially therewith.

Moreover, rotation of the front wheel WF can be braked by means of a front-wheel disk brake BF including a brake disk 31 which rotates together with the front wheel WF and a caliper 32 which is supported on the front fork 11 in such a way as to straddle the outer circumference of the brake disk 31. The front-wheel disk brake BF is disposed on a right side of the front wheel WF. Rotation of the rear wheel WR can be braked by means of a rear-wheel disk brake BR including a brake disk 33 which rotates together with the rear wheel WR and a caliper 34 which is supported on the swing arm 21 in such a way as to straddle the outer circumference of the brake disk 33. The rear-wheel disk brake BR is disposed on a right side of the rear wheel WR.

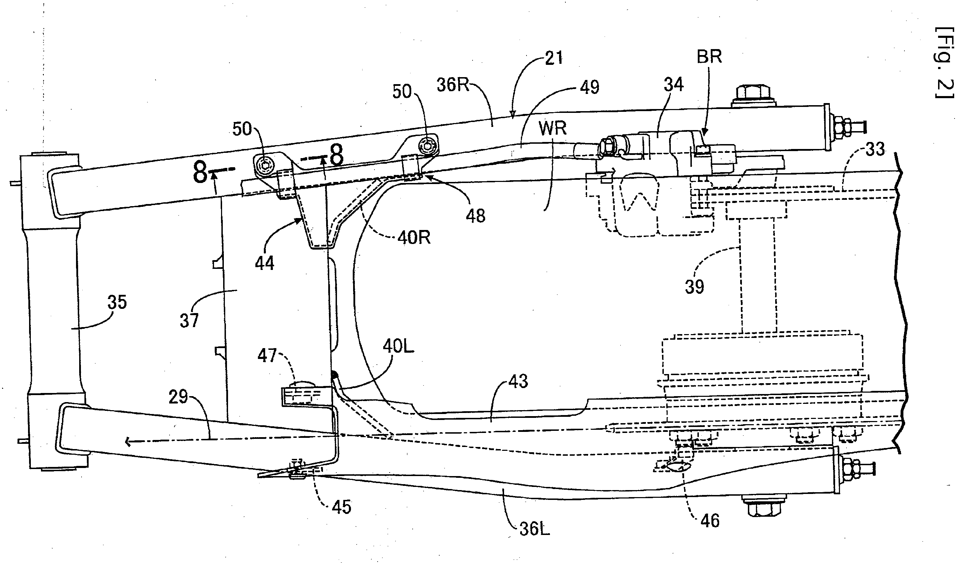

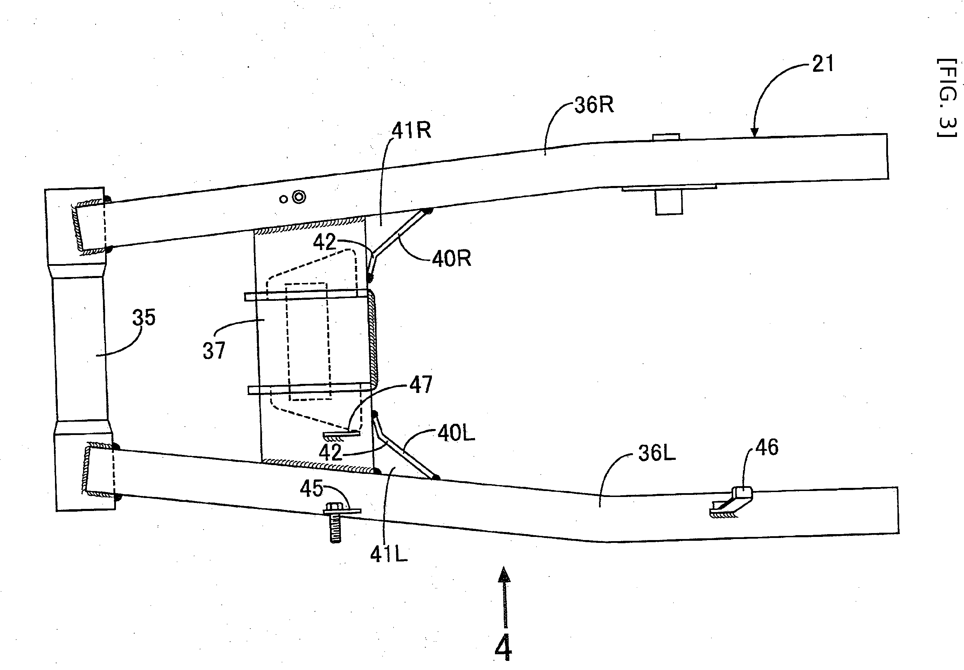

Referring to Figs. 2 to 4, the swing arm 21 includes: a pivot part 35 swingably supported on the pivot plates 15 of the vehicle body frame F through a pivot shaft 22; paired left and right arm parts 36L and 36R each extending rearward from the pivot part 35 and having a rear end portion on which the rear wheel WR is pivotally supported; and a cross member part 37 laid between middle portions, in the front-rear direction, of the arm parts 36L and 36R.

The pivot part 35 is formed in a cylindrical shape such that the pivot shaft 22 (Fig. 1) can be inserted thereinto. In addition, the arm parts 36L and 36R are each formed in a tubular shape with a rectangular vertical cross section. Front end portions of the arm parts 36L and 36R are welded to both end portions of the pivot part 35, respectively. Support holes 38 elongated in the front-rear direction are provided in rear end portions of the arm parts 36L and 36R, respectively. An axle 39 of the rear wheel WR is pivotally supported on the rear end portions of the arm parts 36L and 36R in such a way that its position inside the supporting holes 38 in the front-rear direction can be adjusted. Moreover, the cross member part 37 is formed in a tubular shape with a rectangular vertical cross section, and both end portions thereof are welded to the inner side surfaces of the middle portions, in the front-rear direction, of the arm parts 36L and 36R, respectively.

Paired left and right plate-shaped reinforcement patches 40L and 40R are alone provided respectively between both end portions of the cross member part 37 and the arm parts 36L and 36R, the reinforcement patches 40L and 40R being joined to the rear surfaces of their respective end portions of the cross member part 37 and to the inner side surfaces of portions of their respective arm parts 36L and 36R behind the cross member part 37. The reinforcement patches 40L and 40R form spaces 41 L and 41 R together with both end portions of the cross member part 37 and the arm parts 36L and 36R, respectively, each of the spaces 41 L and 41 R having an open top and bottom.

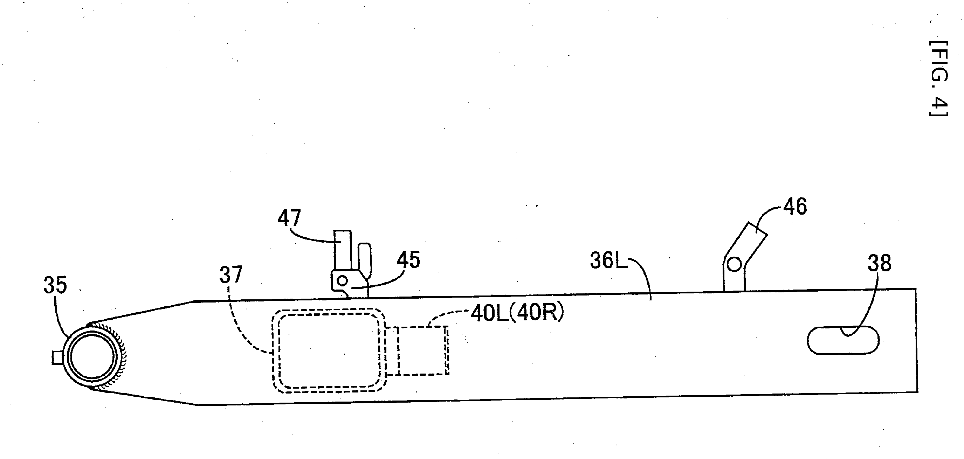

The reinforcement patches 40L and 40R are formed to have forwardly-projecting bent portions 42 in middle portions thereof, respectively. Moreover, the widths of the reinforcement patches 40L and 40R in the top-bottom direction are set smaller than the widths of the arm parts 36L and 36R in the top-bottom direction. As clearly shown in Fig. 4, the widths of the reinforcement patches 40L and 40R in the top-bottom direction are set such that the arm parts 36L and 36R overlap the reinforcement patches 40L and 40R entirely in a side view.

In addition, the arm parts 36L and 36R have a chain cover 43 and a cover member 44 attached thereto, the chain cover 43 and the cover member 44 covering at least part of the reinforcement patches 40L and 40R and also the spaces 41 L and 41 R from above. The chain cover 43, which functions also as a cover member, is attached to the left arm part 36L to cover part of the left reinforcement patch 40L and the entire left space 41 L from above. The cover member 44 is attached to the right arm part 36R to cover the entire right reinforcement patch 40R and the entire right space 41 R from above.

The chain cover 43 partially covers a portion of the chain 29 transmitting power from the engine unit EU, which portion is the portion of the chain 29 running above the left arm part 36L. The chain cover 43 is supported by stays 45 and 46 attached to the upper surface of the left arm part 36L of the swing arm 21 at two positions spaced in the front-rear direction, respectively, and also by a stay 47 attached to the upper surface of the cross member part 37 of the swing arm 21.

The cover member 44 attached to the right arm part 36R is provided with a transmission-member holding part 48 which holds a middle portion of a cord-shaped transmission member for transmitting brake operation force to the rear-wheel brake. In this embodiment, the rear-wheel brake corresponds to the rear-wheel disk brake BR, and the cord-shaped transmission member corresponds to a brake hose 49 guiding the brake fluid's pressure to be applied to the rear-wheel disk brake BR.

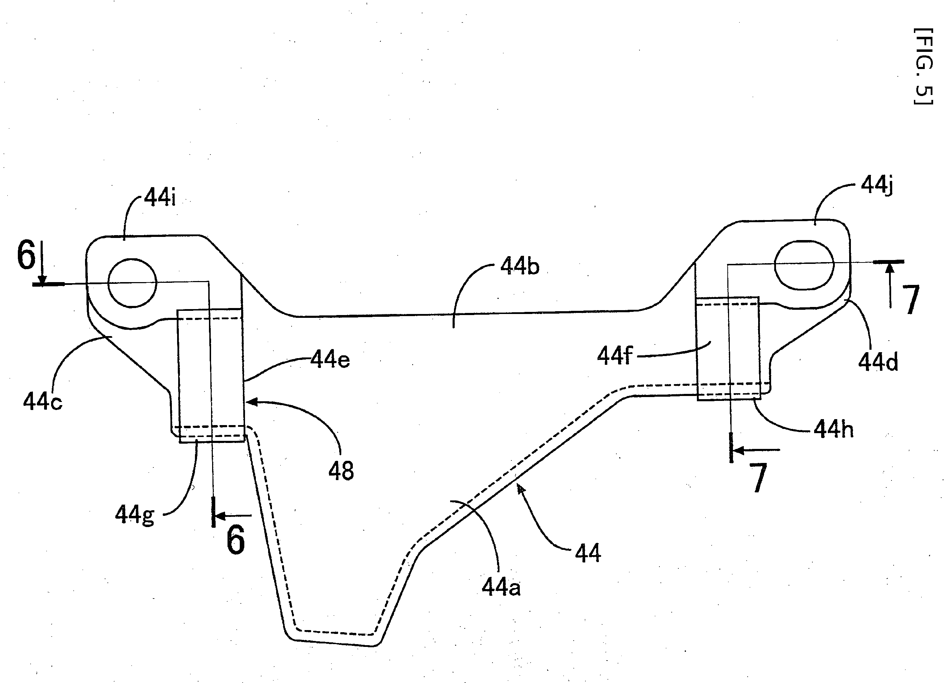

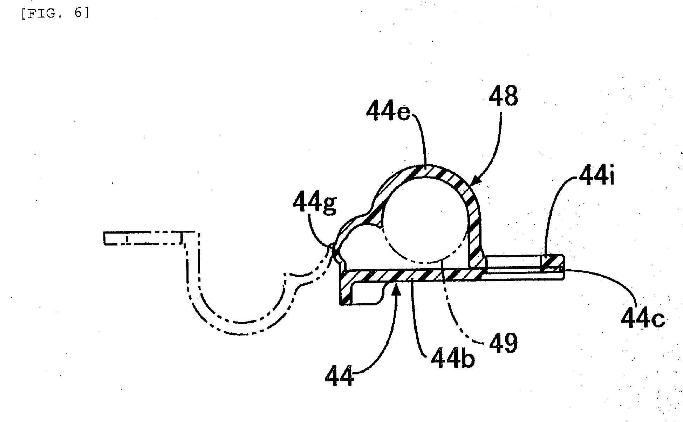

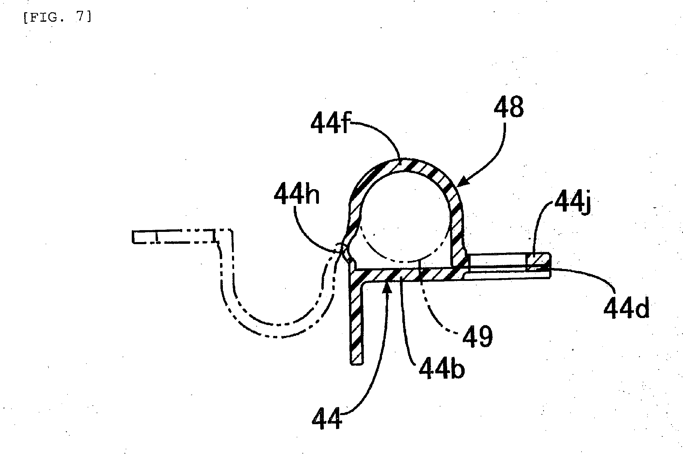

With regard to Figs. 5 to 7, the cover member 44 is made of a synthetic resin and integrally includes a covering portion 44a, a support plate portion 44b, paired front and rear attachment plate portions 44c and 44d, paired ear portions 44e and 44f, hinge portions 44g and 44h, and paired attachment strip portions 44i and 44j. The covering portion 44a covers the right reinforcement patch 40R and the right space 41 R from above. The support plate portion 44b extends longer in the front-rear direction than the covering portion 44a, and also extends outward in the direction of width of the vehicle from the covering portion 44a to be in contact with the upper surface of the right arm part 36R. The attachment plate portions 44c and 44d extend further outward in the direction of width of the vehicle from the front and rear end portions of the support plate portion 44b, respectively. The ear portion 44e or 44f may be disposed at least on one of front and rear sides of the covering portion 44a (on both sides in this embodiment). The hinge portions 44g and 44h connect the front and rear end portions of the support plate portion 44b to the ear portions 44e and 44f, respectively, and permit the ear portions 44e and 44f to be bent toward the front and rear end portions of the support plate portion 44b, respectively. The attachment strip portions 44i and 44j extend from the ear portions 44e and 44f in such a way as to be fastened to the right arm part 36R together with the attachment plate portions 44c and 44d in a state where the ear portions 44e and 44f are bent toward the support plate portion 44b.

The ear portions 44e and 44f are each formed so as to have a vertical cross section in the shape of a circular arc, such that the brake hose 49 can be sandwiched between itself and the support plate portion 44b. The transmission-member holding part 48 is formed by the ear portions 44e and 44f and support plate portion 44b cooperating with each other in a state where the ear portions 44e and 44f are bent to sandwich the brake hose 49 between themselves and the support plate portion 44b and where the attachment strip portions 44i and 44j are fastened to the arm part 36R together with the attachment plate portions 44c and 44d.

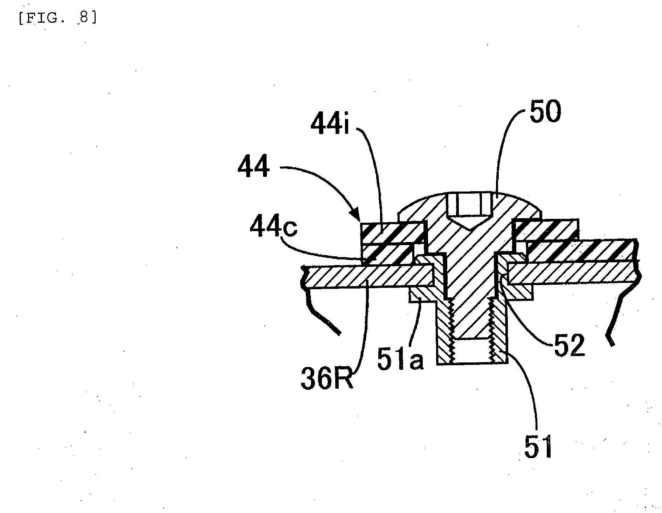

In Fig. 8, nuts 51 are secured to the right arm part 36R, the nuts 51 being used for fastening together the attachment strip portions 44i and 44j and their respective attachment plate portions 44c and 44d with screw members 50. Attachment holes 52 in which to secure the nuts 51 are provided in the upper wall of the right arm part 36R. Each nut 51 is formed in a tubular shape having a collar portion 51 a in a middle portion thereof, the collar portion 51 a engaging with the inner surface of the upper wall of the right arm part 36R from below. An upper end portion of the nut 51 inserted in the attachment hole 52 from below is engaged by caulking with the upper surface of the right arm part 36R, so that the nut 51 is fixed to the right arm part 36R.

Next, effects of this embodiment will be described. The swing arm 21 includes: the pivot part 35 swingably supported on the pivot plates 15 of the vehicle body frame F through the pivot shaft 22; the paired left and right arm parts 36L and 36R, each extending rearward from the pivot part 35 and having a rear end portion on which the rear wheel WR is pivotally supported; and the cross member part 37 laid between middle portions, in the front-rear direction, of the arm parts 36L and 36R. In this swing arm 21, only the paired left and right plate-shaped reinforcement patches 40L and 40R are provided between both end portions of the cross member part 37 and the arm parts 36L and 36R, the reinforcement patches 40L and 40R being joined to the rear surfaces of both end portions of the cross member part 37 and to the inner side surfaces of portions of the arm parts 36L and 36R behind the cross member part 37. The reinforcement patches 40L and 40R form the spaces 41 L and 41 R together with both end portions of the cross member part 37 and the arm parts 36L and 36R, each of the spaces 41 L and 41 R having an open top and bottom.

Thus, the reinforcement patches 40L and 40R can secure the rigidity in the direction of width of the vehicle and the torsional rigidity of the joining portions of the cross member part 37 and the arm parts 36L and 36R. Additionally, since the reinforcement patches 40L and 40R form the spaces 41 L and 41 R, each having an open top and bottom, together with both end portions of the cross member part 37 and the arm parts 36L and 36R, the arm parts 36L and 36R can flexibly bend moderately in the top-bottom direction behind the cross member part 37.

Moreover, the reinforcement patches 40L and 40R are formed to have the forwardly-projecting bent portions 42 in middle portions thereof. Thus, loads are transmitted from the arm parts 36L and 36R toward the reinforcement patches 40L and 40R in such a way as to further bend the bent portions 42. This, as a result, makes it possible to relax stress concentration at the joining portions of the reinforcement patches 40L and 40R and their respective arm parts 36L and 36R. Additionally, since the widths of the reinforcement patches 40L and 40R in the top-bottom direction are set smaller than the widths of the arm parts 36L and 36R in the top-bottom direction, the arm parts 36L and 36R can flexibly bend more easily than otherwise.

Moreover, the chain cover 43, which functions also as the cover member 44, is attached to the left arm part 36L of the swing arm 21 to cover part of the left reinforcement patch 40L and the entire left space 41 L from above. The cover member 44 is attached to the right arm part 36R to cover the entire right reinforcement patch 40R and the entire right space 41 R from above. This makes the reinforcement patches 40L and 40R and the spaces 41 L and 41 R less visible from the outside than otherwise. Accordingly, the appearance of the exterior can be improved.

The cover member 44 attached to the right arm part 36R is provided with the transmission-member holding part 48 which holds a middle portion of the brake hose 49 guiding the brake fluid's pressure to the rear-wheel disk brake BR for braking rotation of the rear wheel WR. This eliminates the need for an exclusive member to hold the brake hose 49 at least in the vicinity of the cover member 44. Accordingly, the number of components can be reduced.

Furthermore, the cover member 44 is made of a synthetic resin and integrally includes the covering portion 44a, the support plate portion 44b, the paired front and rear attachment plate portions 44c and 44d, the paired ear portions 44e and 44f, the hinge portions 44g and 44h, and the paired attachment strip portions 44i and 44j. The covering portion 44a covers the right reinforcement patch 40R and the right space 41 R from above. The support plate portion 44b extends outward in the direction of width of the vehicle from the covering portion 44a to be in contact with the upper surface of the right arm part 36R. The attachment plate portions 44c and 44d extend further outward in the direction of width of the vehicle from the support plate portion 44b. The ear portion 44e or 44f is disposed at least on one of front and rear sides of the covering portion 44a (on both sides in this embodiment). The hinge portions 44g and 44h connect the support plate portion 44b and the ear portions 44e and 44f and permit the ear portions 44e and 44f to be bent toward the support plate portion 44b. The attachment strip portions 44i and 44j extend from the ear portions 44e and 44f in such a way as to be fastened to the right arm part 36R together with the attachment plate portions 44c and 44d in a state where the ear portions 44e and 44f are bent toward the support plate portion 44b. Moreover, the transmission-member holding part 48 is formed by the ear portions 44e and 44f and support plate portion 44b cooperating with each other in a state where the ear portions 44e and 44f are bent to sandwich the brake hose 49 between themselves and the support plate portion 44b and where the attachment strip portions 44i and 44j are fastened to the arm part 36R together with the attachment plate portions 44c and 44d. This makes it possible to mould the cover member 44 without using a slide mould, and accordingly contributes to reduction in the moulding cost of the cover member 44.

Hereinabove, a preferred embodiment of the present invention has been described. However, the present invention is not limited to the embodiment described above, and various design changes can be made without departing from the present invention described in the scope of claims.

For example, although the embodiment is described in the context of a motorcycle as the saddle-ride type vehicle, the present invention is applicable also to other saddle-ride type vehicles such as motor tricycles.

Moreover, the rear-wheel brake for braking the rear wheel WR may be a drum brake, in which case the cover member may be provided with a transmission-member holding part which holds a middle portion of a brake cable serving as a cord-shaped transmission member for transmitting brake operation force to the drum brake.

## Claims

1. A swing arm for a saddle-ride type vehicle including: a pivot part (35) adapted to be swingably supported on a vehicle body frame (F); paired left and right arm parts (36L, 36R) each extending rearward from the pivot part (35) and having a rear end portion on which a rear wheel (WR) can be pivotally supported; and a cross member part (37) laid between middle portions, in a front-rear direction, of the arm parts (36L, 36R), wherein
paired left and right plate-shaped reinforcement patches (40L, 40R) are provided respectively between both end portions of the cross member part (37) and the arm parts (36L, 36R), the reinforcement patches (40L, 40R) being joined to rear surfaces of the respective end portions of the cross member part (37) and to inner side surfaces of portions of the respective arm parts (36L, 36R) behind the cross member part (37), and
the reinforcement patches (40L, 40R) form spaces (41 L, 41 R) together with the both end portions of the cross member part (37) and the arm parts (36L, 36R), respectively, each of the spaces (41 L, 41 R) having an open top and bottom;
**characterized in that** cover members (43, 44) covering at least part of the reinforcement patches (40L, 40R) and the spaces (41 L, 41R) from above are attached to the arm parts (36L, 36R), respectively.

2. The swing arm for a saddle-ride type vehicle according to claim 1, wherein each of the reinforcement patches (40L, 40R) is formed to have a bent portion (42) in a middle portion thereof.

3. The swing arm for a saddle-ride type vehicle according to claim 1 or claim 2, wherein one of the cover members (44) is provided with a transmission-member holding part (48) which can hold a middle portion of a cord-shaped transmission member (49) for transmitting brake operation force to a rear-wheel brake (BR) for braking rotation of the rear wheel (WR).

4. The swing arm for a saddle-ride type vehicle according to claim 3, wherein
the one cover member (44) is made of a synthetic resin and integrally includes a covering portion (44a), a support plate portion (44b), an attachment plate portion (44c, 44d), an ear portion (44e, 44f), a hinge portion (44g, 44h), and an attachment strip portion (44i, 44j), the covering portion (44a) covering the reinforcement patch (40R) and the space (41 R) from above, the support plate portion (44b) extending outward in a direction of width of the vehicle from the covering portion (44a) to be in contact with an upper surface of the arm part (36R), the attachment plate portion (44c, 44d) extending further outward in the direction of width of the vehicle from the support plate portion (44b), the ear portion (44e, 44f) being disposed at least on one of front and rear sides of the covering portion (44a), the hinge portion (44g, 44h) connecting the support plate portion (44b) and the ear portion (44e, 44f) and permitting the ear portion (44e, 44f) to be bent toward the support plate portion (44b), the attachment strip portion (44i, 44j) extending from the ear portion (44e, 44f) in such a way as to be fastened to the arm part (36R) together with the attachment plate portion (44c, 44d) in a state where the ear portion (44e, 44f) is bent toward the support plate portion (44b), and
the transmission-member holding part (48) is formed by the ear portion (44e, 44f) and the support plate portion (44b) cooperating with each other in a state where the ear portion (44e, 44f) is bent so as to sandwich the transmission member (49) between itself and the support plate portion (44b) and where the attachment strip portion (44i, 44j) is fastened to the arm part (36R) together with the attachment plate portion (44c, 44d).

5. The swing arm for a saddle-ride type vehicle according to any one of claims 1 to 4, wherein widths of the reinforcement patches (40L, 40R) in a top-bottom direction are set smaller than widths of the arm parts (36L, 36R) in the top-bottom direction.

6. A saddle-ride type vehicle with a swing arm as claimed in any preceding claim.

## Patentansprüche

1. Eine Schwinge für ein Fahrzeug vom Sattelfahrtyp, umfassend:
Einen Achsteil (35), der angepasst ist, um schwenkbar an einem Fahzeugkarosserierahmen (F) abgestützt zu werden; Paarweise linke und rechte Armteile (36L, 36R), die sich jeweils von dem Achsteil (35) nach hinten erstrecken und einen hinteren Endabschnitt aufweisen, an dem ein Hinterrad (WR) drehbar abgestützt werden kann; und einen Querstrebenteil (37), der zwischen sich in Front-Heck-Richtung mittig befindlichen Abschnitten der Armteile (36L, 36R) angelegt ist, wobei
jeweils paarweise linke und rechte, plättchenförmige Verstärkungen (40L, 40R) zwischen beiden Endabschnitten des Querstrebenteils (37) und den Armteilen (36L, 36R) bereitgestellt sind und diese Verstärkungen (40L, 40R) mit hinteren Flächen der jeweiligen Endabschnitte des Querstrebenteils (37) und mit inneren Flächen von Abschnitten der jeweiligen Armteile (36L, 36R) hinter dem Querstrebenteil (37) verbunden sind, und
die Verstärkungen (40L, 40R) zusammen mit den beiden Endabschnitten des Querstrebenteils (37) und den jeweiligen Armteilen (36L, 36R) Zwischenräume (41 L, 41 R) bilden und jeder dieser Zwischenräume (41 L, 41 R) nach oben und unten hin offen ist,
**dadurch gekennzeichnet, dass** Abdeckelemente (43, 44), die die Verstärkungen (40L, 40R) und die Zwischenräume (41 L, 41 R) von oben zumindest teilweise abdecken, jeweils an den Armteilen (36L, 36R) befestigt sind.

2. Eine Schwinge für ein Fahrzeug vom Sattelfahrtyp nach Anspruch 1, wobei jede der Verstärkungen (40L, 40R) so gestaltet ist, dass sie in einem eigenen mittleren Abschnitt einen gebogenen Abschnitt (42) aufweist.

3. Eine Schwinge für ein Fahrzeug vom Sattelfahrtyp nach Anspruch 1 oder Anspruch 2, wobei eines der Abdeckelemente (44) mit einem Übertragungselement-Halterungsteil (48) bereitgestellt ist, welches einen mittleren Abschnitt eines kabelförmigen Übertragungselementes (49) zur Übertragung von Bremskraft auf eine Hinterradbremse (BR) zum Abbremsen der Drehung des Hinterrades (WR) aufnehmen kann.

4. Eine Schwinge für ein Fahrzeug vom Sattelfahrtyp nach Anspruch 3, wobei das eine Abdeckelement (44) aus Kunstharz hergestellt ist und im Wesentlichen einen Abdeckbereich (44a), einen Tragplattenbereich (44b), einen Befestigungsplattenbereich (44c, 44d), einen Öhrbereich (44e, 44f), einen Gelenkbereich (44g, 44h) und einen Befestigungsstreifenbereich (44i, 44j) umfasst, wobei der Abdeckbereich (44a) die Verstärkung (40R) und den Zwischenraum (41 R) von oben abdeckt, der Tragplattenbereich (44b) sich in einer Richtung der Fahrzeugbreite außen von dem Abdeckbereich (44a) erstreckt, so dass er in Kontakt mit einer oberen Fläche des Armteils (36R) steht, der Befestigungsplattenbereich (44c, 44d) sich in der Richtung der Fahrzeugbreite weiter außen von dem von dem Tragplattenbereich (44b) erstreckt, der Öhrbereich (44e, 44f) an zumindest einer der Vorder- oder Hinterseiten des Abdeckbereichs (44a) angeordnet ist, der Gelenkbereich (44g, 44h) den Tragplattenbereich (44b) und den Öhrbereich (44e, 44f) verbindet und es ermöglicht, dass der Öhrbereich (44e, 44f) in Richtung des Tragplattenbereichs (44b) gebogen werden kann, der Befestigungsstreifenbereich (44i, 44j) sich von dem Öhrbereich (44e, 44f) in einer Weise erstreckt, dass er, in einem Zustand, in dem der Öhrbereich (44e, 44f) in Richtung des Tragplattenbereichs (44b) gebogen ist, zusammen mit dem Befestigungsplattenbereich (44c, 44d) an den Armteil (36R) geschraubt werden kann, und
der Übertragungselement-Halterungsteil (48) von dem Öhrbereich (44e, 44f) und dem Tragplattenbereich (44b) durch gegenseitige Zusammenwirkung in einem Zustand gebildet wird, in dem der Öhrbereich (44e, 44f) so gebogen ist, dass er das Übertragungselement (49) zwischen sich selbst und dem Tragplattenbereich (44b) einkeilt, und in dem der Befestigungsstreifenbereich (44i, 44j) zusammen mit dem Befestigungsplattenbereich (44c, 44d) an den Armteil (36R) geschraubt ist.

5. Eine Schwinge für ein Fahrzeug vom Sattelfahrtyp nach einem der Ansprüche 1 bis 4, wobei die Breiten der Verstärkungen (40L, 40R) in Oben-Unten-Richtung kleiner gewählt sind als die Breiten der Armteile (36L, 36R) in Oben-Unten-Richtung

6. Ein Fahrzeug vom Sattelfahrtyp mit einer Schwinge nach einem der voranstehenden Ansprüche.

## Revendications

1. Bras oscillant pour un véhicule du type à enfourcher comprenant une partie pivot (35) qui est à même d'être supportée à oscillation sur un châssis de corps de véhicule (F) ; des parties de bras gauche et bras droit appariées (36L, 36R) s'étendant chacune à l'arrière de la partie pivot (35) et ayant une portion d'extrémité arrière sur laquelle une roue arrière (WR) peut être supportée à pivotement ; et une partie de traverse (37) disposée entre des portions centrales, dans le sens avant-arrière, des parties de bras (36L, 36R), dans lequel :
des pièces de renfort en forme de plaques gauche et droite appariées (40L, 40R) sont disposées respectivement entre les deux portions d'extrémité de la partie de traverse (37) et les parties de bras (36L, 36R), les pièces de renfort (40L, 40R) étant jointes aux surfaces arrière des portions d'extrémité respectives de la partie de traverse (37) et à des surfaces latérales internes de portions des parties de bras respectives (36L, 36R) derrière la partie de traverse (37) et
les pièces de renfort (40L, 40R) forment des espaces (41L, 41R) conjointement avec les deux portions d'extrémité de la partie de traverse (37) et les parties de bras (36L, 36R), respectivement, chacun des espaces (41L, 41R) ayant une partie supérieure et une partie inférieure ouvertes ;
**caractérisé en ce que** des éléments coiffants (43, 44) recouvrant au moins une partie des pièces de renfort (40L, 40R) et les espaces (41L, 41R) par le dessus sont fixés aux parties de bras (36L, 36R), respectivement.

2. Bras oscillant pour un véhicule du type à enfourcher selon la revendication 1, dans lequel chacune des pièces de renfort (40L, 40R) est formée de manière à avoir une portion courbée (42) dans sa portion centrale.

3. Bras oscillant pour un véhicule du type à enfourcher selon la revendication 1 ou la revendication 2, dans lequel l'un des éléments coiffants (44) est pourvu d'une partie de maintien d'élément de transmission (48) qui peut maintenir une portion centrale d'un élément de transmission en forme de câble (49) pour transmettre une force opérationnelle de freinage à un frein de roue arrière (BR) afin de freiner la rotation de la roue arrière (WR).

4. Bras oscillant pour un véhicule du type à enfourcher selon la revendication 3, dans lequel :
le un élément coiffant (44) est constitué d'une résine synthétique et comprend d'un seul tenant une portion coiffante (44a), une portion de plaque de support (44b), une portion de plaque de fixation (44c, 44d), une portion de ressaut (44e, 44f), une portion de charnière (44g, 44h) et une portion de ruban de fixation (44i, 44j), la portion coiffante (44a) couvrant la pièce de renfort (40R) et l'espace (41R) par le dessus, la portion de plaque de support (44b) s'étendant vers l'extérieur dans le sens de la largeur du véhicule à partir de la portion coiffante (44a) pour être en contact avec une surface supérieure de la partie de bras (36R), la portion de plaque de fixation (44c, 44d) s'étendant plus loin vers l'extérieur dans le sens de la largeur du véhicule depuis la portion de plaque de support (44b), la portion de ressaut (44e, 44f) étant disposée au moins sur l'un des côtés avant et arrière de la portion coiffante (44a), la portion de charnière (44g, 44h) raccordant la portion de plaque de support (44b) et la portion de ressaut (44e, 44f) et permettant de courber la portion de ressaut (44e, 44f) vers la portion de plaque de support (44b), la portion de ruban de fixation (44i, 44j) s'étendant de la portion de ressaut (44e, 44f) de manière à être fixée à la partie de bras (36R) conjointement avec la portion de plaque de fixation (44c, 44d) dans un état où la portion de ressaut (44e, 44f) est courbée vers la portion de plaque de support (44b), et
la partie de maintien d'élément de transmission (48) est formée par la portion de ressaut (44e, 44f) et la portion de plaque de support (44b) coopérant 1"une avec l'autre dans un état où la portion de ressaut (44e, 44f) est courbée de manière à prendre en sandwich l'élément de transmission (49) entre elle-même et la portion de plaque de support (44b) et où la portion de ruban de fixation (44i, 44j) est fixée à la partie de bras (36R) conjointement avec la portion de plaque de fixation (44c, 44d).

5. Bras oscillant pour un véhicule du type à enfourcher selon l'une quelconque des revendications 1 à 4, dans lequel les largeurs des pièces de renfort (40L, 40R) dans le sens dessus-dessous sont réglées plus petites que les largeurs des parties de bras (36L, 36R) dans le sens dessus-dessous.

6. Véhicule du type à enfourcher comprenant un bras oscillant selon l'une quelconque des revendications précédentes.
